## Europäisches Patentamt
## European Patent Office
## Office européen des brevets

(11) Publication number: **0 064 556**
**B1**

(12) **EUROPEAN PATENT SPECIFICATION**

(45) Date of publication of patent specification: **12.03.86**

(51) Int. Cl.⁴: **F 16 B 15/04**

(21) Application number: **81903009.9**

(22) Date of filing: **07.11.81**

(86) International application number:
**PCT/JP81/00322**

(87) International publication number:
**WO 82/01751 27.05.82 Gazette 82/14**

(54) **NAIL.**

(30) Priority: **10.11.80 JP 162715/80 u**

(43) Date of publication of application:
**17.11.82 Bulletin 82/46**

(45) Publication of the grant of the patent:
**12.03.86 Bulletin 86/11**

(84) Designated Contracting States:
**AT DE FR GB NL SE**

(56) References cited:
**DE-A-1 775 087**
**JP-B-46 017 656**
**JP-Y-44 004 502**
**US-A-1 608 773**
**US-A-2 150 788**

(73) Proprietor: **WAKAI & CO. LTD.**
**2, Higashishimizu-cho Minami-ku Osaka-shi**
**Osaka 542 (JP)**

(72) Inventor: **WAKAI, Takao**
**3-2, 2-chome, Morikawachinishi Higashiosaka-shi**
**Osaka 577 (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a nail comprising an inner nail being axially cut into a plurality of portions along an axial split line and comprising a head.

The nail of this kind is known from US—A—2 150 788. This known nail can be used not only with materials having a restoring power, such as wood, but also with material not having such restoring force, such as foamed concrete and heat insulating materials. When driven into the material the known nail has a body portion which is split into a plurality of portions. These portions are adapted to spread in the material from the tip of the nail when the nail is driven into the material. But because the shaft portions merely spread in the material, they come off along the holes when a pulling force in the axial direction of the nail is applied. Thus, they could not provide a sufficient fastening effect.

It is an aim object of the present invention to provide a nail which obviates this problem and which has an excellent effect in preventing the coming off of the nail from the material after been driven in.

This object of the invention is solved for a nail of the known kind by the features, that furthermore an outer nail is mounted on said inner nail and is cut axially into a plurality of portions along a further axial split line, said inner and outer nails being arranged so that their split lines will cross each other.

By providing the additional outer nail with the split line crossing the split line of the inner nail the nail of the present invention, when driven, as the inner nail spreads, it engages the outer nail which is also spreading. This has the following advantage. If a pulling force will be applied to the nail, the inner nail and the outer nail tend to close themselves. However, since the inner nail is spread through the split line of the outer nail, while closing the outer nail comes into contact with the spread inner nail preventing the outer nail from closing itself. This means a much larger resistance against the pulling force. Therefore the nail will not get off easily even if a pulling force is applied.

Further features and advantages can be seen from the claims and the following description.

Brief Explanation of the Drawings

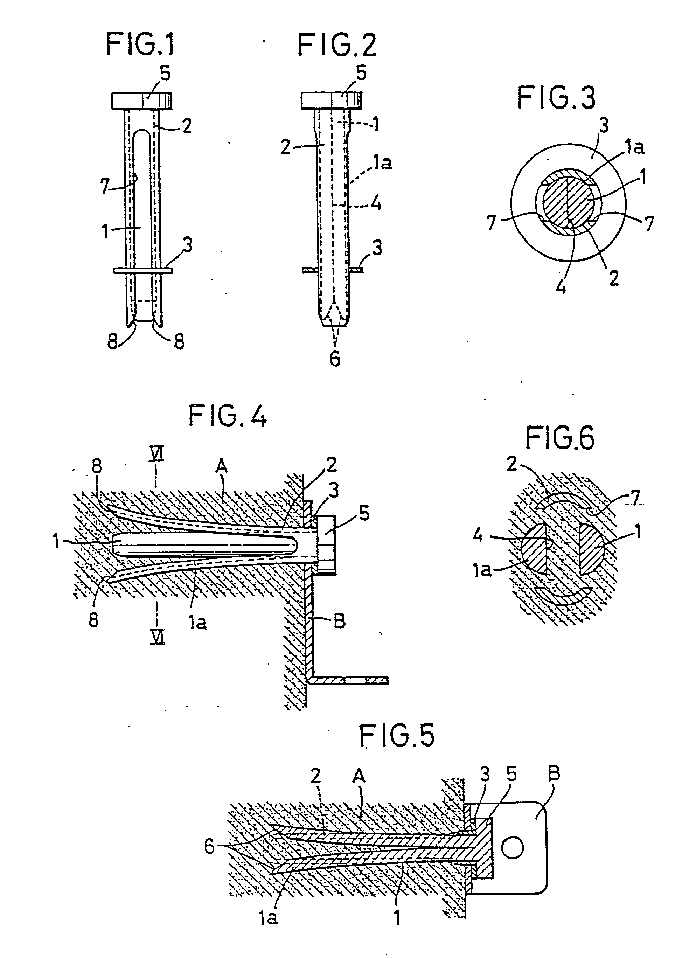

Fig. 1 is a front view of a nail according to the present invention; Fig. 2 is a vertical sectional side view; Fig. 3 is an enlarged horizontal sectional view; Fig. 4 is a vertical sectional view showing the nail completely driven; Fig. 5 is a sectional plan view showing the nail completely driven; and Fig. 6 is an enlarged sectional view taken along line VI—VI in Fig. 4.

Best Mode for Embodying Invention

In order to describe the present invention in more detail, an embodiment of the present invention will be described below with reference to the accompanying drawings.

As illustrated, the nail includes an inner nail 1, an outer nail 2 mounted on the inner nail, and a washer 3 mounted on the outer nail adjacent to the top of the nail.

The inner nail has a head 5 and a shaft 1a, said shaft being axially cut into two portions to a point near the head 5 along a line of cut 4. The two portions have a tapered surface 6 at their tip so as to serve as a guide when the nail is driven.

The outer nail 2 is in the form of a pipe to be mounted on the shaft of the inner nail 1 and has its base secured to the head 5 of the inner nail 1. It is cut into the same number of portions as the shaft 1a of the inner nail 1 with wide slots 7 formed therebetween. But, the outer nail 2 may not be cut into the same number of portions as the inner nail 1. The nail may be so constructed that the inner nail 1 is integral with the outer nail 2 at the head of the nail.

In Fig. 1, the outer nail 2 has its tip projecting slightly beyond the tip of the inner nail 1, but their length can be freely determined. The outer nail may have its tip shorter than that of the inner nail. The outer nail 2, too, has tapered surfaces 8 at its tip to serve as a guide for easy entering into the material when the nail is driven.

In the embodiment, as shown in Fig. 3, the line of cut 4 for the inner nail 1 is adapted to be perpendicular to the slot 7 for the outer nail 2. The direction of split of the inner and outer nails can be freely changed by selecting the relative position between the cut line 4 and the slot 7.

The washer 3 serves to prevent the tips of the inner and outer nails from spreading too early.

The head 5 of the nail is not limited to the shape and structure illustrated. It may be provided with a threaded shaft or a mounting hole.

Fig. 4 and 5 are sectional side and plan views, respectively, showing the nail of the present invention used to fasten a metal fitting B to a foundation A of foamed concrete or a heat-insulating material.

In use, the nail is driven by striking its head 5 in the same manner as with an ordinary nail, with its tip passing through the metal fitting B. Driving proceeds with the tip of the nail not spreading until the washer 3 abuts the metal fitting B. When the nail is further driven after the washer has abutted the metal fitting, the nail advances into the material while bringing the washer 3 toward the head by reaction force from the foundation. The tips of the inner and outer nails spread outwardly with their tapered surfaces 6 and 8 serving as a guide.

When the nail has been completely driven, as shown in Figs. 4 and 5, until the head 5 holds down the metal fitting through the washer 3, the tips of the inner and outer nails will spread in directions perpendicular to each other, as shown in Fig. 6. As the shaft of the inner nail 1 spreads, the tips of the inner nail come outwardly beyond the slot 7 of the outer nail. The material of the foundation A is tightly compressed between the split portions of the inner and outer nails. Therefore, both of the nails fasten to the material.

Even if a pulling force is applied to the nail, it will not come off because the material bites into among the portions of the inner and outer nails. Thus, it provides a secure fastening effect.

Industrial Utilizability

The nail according to the present invention has a secure coming-off prevention effect. It is comprised of a simple combination of an inner nail and an outer nail mounted on the iner nail. Therefore, it is easy to manufacture and suitable for mass production. It can be widely used to fasten metal parts to foamed concrete and various types of heat insulating materials.

**Claims**

1. A nail comprising an inner nail (1) being axially cut into a plurality of portions along an axial split line (4) and comprising a head (5) characterised in that furthermore an outer nail (2) is mounted on said inner nail and is cut axially into a plurality of portions along a further axial split line, said inner and outer nails (1, 2) being arranged so that their split lines will cross each other.

2. The nail as claimed in claim 1 wherein the split line for said outer nail (2) is in the form of wide slots (7).

3. The nail as claimed in claim 1 wherein said inner and outer nails (1, 2) have inwardly tapered surfaces (6, 8) in their tip.

4. The nail as claimed in claim 1 or 3 wherein one of said inner nail and said outer nail is shorter than the other.

5. The nail as claimed in claim 1 wherein said inner nail has a head (5) at one end thereof, said head being threaded.

6. The nail as claimed in claim 1 wherein a washer (3) is mounted on said outer nail.

**Patentansprüche**

1. Nagal mit einem Innennagel (1), der axial entlang einer axialen Trennfuge (4) in eine Vielzahl von Abschnitten aufgeschnitten ist und einen Kopf (5) aufweist, dadurch gekennzeichnet, daß ferner ein Außennagel (2) auf dem Innennagel befestigt ist und in axialer Richtung entlang einer zweiten Trennfuge in eine Vielzahl von Teilen aufgeschnitten ist, wobei der Innennagel und Außennagel (1, 2) so angeordnet sind, daß sich ihre Trennfugen kreuzen.

2. Nagel nach Anspruch 1, dadurch gekennzeichnet, daß die Trennfuge für den Außennagel (2) die Form von breiten Schlitzen (7) hat.

3. Nagel nach Anspruch 1, dadurch gekennzeichnet, daß Innennagel und Außennagel (1, 2) nach innen geneigte Flächen (6, 8) an ihren Spitzen aufweisen.

4. Nagel nach einem der Ansprüche 1 oder 3, dadurch gekennzeichnet, daß der Innennagel oder der Außennagel kürzer als der andere ist.

5. Nagel nach Anspruch 1, dadurch gekennzeichnet, daß der Innennagel an seinem einen Ende einen Kopf (5) aufweist, der mit einem Gewinde versehen ist.

6. Nagel nach Anspruch 1, dadurch gekennzeichnet, daß auf dem Außennagel eine Beilagscheibe (3) befestigt ist.

**Revendications**

1. Un clou comportant un clou intérieur (1) fendu axialement de manière à déterminer plusieurs parties le long d'une ligne de fente axiale (4) et comportant une tête (5), caractérisé en ce que de plus un clou extérieur (2) est monté sur ledit clou intérieur et est fendu axialement de manière à déterminer plusieurs parties le long d'une autre ligne de fente axiale, lesdits clous (1, 2) intérieur et extérieur étant disposés de telle sorte que leurs lignes de fente se croisent.

2. Le clou tel que revendiqué dans la revendication 1, dans lequel la ligne de fente pour letit clou extérieur (2) est sous la forme de larges entailles (7).

3. Le clou tel que revendiqué dans la revendication 1, dans lequel lesdits clous (1, 2) intérieur et extérieur ont des surfaces intérieures inclinées vers leur extrémité.

4. Le clou tel que revendiqué dans la revendication 1 ou 3, dans lequel l'un desdits clou intérieur et clou extérieur est plus court que l'autre.

5. Le clou tel que revendiqué dans la revendication 1, dans lequel ledit clou intérieur a une tête (5) à l'une de ses extrémités, ladite tête étant filetée.

6. Le clou tel que revendiqué dans la revendication 1, dans lequel une rondelle (3) est montée sur ledit clou extérieur.

0 064 556

FIG.1

FIG.2

FIG.3

FIG.4

FIG.6

FIG.5

1